# EUROPÄISCHE PATENTSCHRIFT

(11) **EP 3 646 308 B1**
(45) Veröffentlichungstag und Bekanntmachung des Hinweises auf die Patenterteilung: **01.12.2021**
(21) Anmeldenummer: 18745483.0
(22) Anmeldetag: 26.06.2018
(51) Int. Cl.: G09B 23/28, G09B 23/32

(54) **PATIENTENSIMULATOR**
PATIENT SIMULATOR
SIMULATEUR DE PATIENT

(30) Priorität: 28.06.2017 AT 2712017
(43) Veröffentlichungstag der Anmeldung: 06.05.2020
(73) Patentinhaber: SIMCharacters GmbH, 1060 Wien (AT)
(72) Erfinder: HALLER, Michael, A-1040 Wien (AT); SCHWINDT, Jens Christian, A-3021 Pressbaum Bei Wien (AT); EHN, Bernhard, A-2193 Erdberg (AT); JAGOS, Harald, A-1220 Wien (AT)
(74) Vertreter: Keschmann, Marc
(86) Internationale Anmeldenummer: PCT/AT2018/000060
(87) Internationale Veröffentlichungsnummer: WO 2019/000002

(56) Entgegenhaltungen:
- EP-A1- 2 276 014
- WO-A1-2015/161337
- WO-A2-2005/032327
- JP-U- H0 538 667

## Beschreibung

Die Offenbarung betrifft einen Patientensimulator, insbesondere Frühgeborenen-, Neugeborenen- oder Kindersimulator, umfassend eine Thoraxnachbildung, die eine Brustkorbnachbildung mit wenigstens einem heb- und senkbaren Brustkorbelement zur Simulation einer Brustkorbhebung und -senkung aufweist, eine Bauchdeckenmechanik, die eine Bauchdeckennachbildung mit wenigstens einem heb- und senkbaren Bauchdeckenelement zur Simulation einer Bauchdeckenhebung und -senkung aufweist, einen Lungensimulator, eine in eine Kavität mündende anatomische Luftröhrennachbildung, eine in eine Kavität mündende anatomische Speiseröhrennachbildung und eine Steuervorrichtung.

Patientensimulatoren dienen dem Training von Ärzten oder anderem medizinischen Personal und umfassen in der Regel eine Nachbildung eines Teils des Körpers oder des ganzen Körpers eines Patienten, wobei die Nachbildung Übungsszenarien mit dem Ziel erlaubt, den Übungsteilnehmer auf reale medizinische Notfälle vorzubereiten. Herkömmliche Patientensimulatoren weisen eine Reihe von Funktionseinschränkungen auf, die dazu führen, dass Fehlbehandlungen nicht ohne weiteres mit der erforderlichen Sicherheit erkannt werden. Dies ist insbesondere beim Simulieren der Beatmung des Simulators problematisch, weil eine fehlerhafte Vorgehensweise in der Realität hier besonders gravierende Konsequenzen mit sich bringt.

Es sind bereits Patientensimulatoren bekannt geworden, die einen Lungensimulator aufweisen, mit welchem verschiedene Zustände der Lunge simuliert werden können und welcher das Trainieren von Beatmungsvorgängen erlaubt. Ein Lungensimulator umfasst in der Regel eine Nachbildung der grundlegenden atemmechanischen Parameter eines Menschen, wie insbesondere des Strömungswiderstandes der Atemwege (Resistance) und der Dehnbarkeit der Lunge (Compliance). Im einfachsten Fall umfasst ein Lungensimulator eine pneumatische Reihenschaltung einer Resistance und einer Compliance. Der Lungensimulator dient dazu, verschiedene Zustände der Lunge eines Patienten z.B. hinsichtlich der Resistance und der Compliance zu simulieren, was insbesondere für das Üben der Beutelbeatmung als auch der maschinellen Beatmung mit Hilfe einer Beatmungsmaschine von großem Vorteil ist. Um in diesem Zusammenhang eine endotracheale Intubation bzw. Beatmung des Simulators zu ermöglichen, umfasst der erfindungsgemäße Patientensimulator zusätzlich zum Lungensimulator eine zum Lungensimulator führende Luftröhrennachbildung, sowie vorzugsweise eine anatomische Kehlkopfnachbildung, und eine Speiseröhrennachbildung.

Da die Versorgung eines kritisch kranken Früh- oder Neugeborenen ein relativ seltenes Ereignis ist, bedarf sie eines schnellen, überlegten und strukturierten Handelns des medizinischen Personals, weshalb es immer wieder zu Problemen in der Umsetzung der medizinischen Handlungen und der Zusammenarbeit im Team kommt. Werden bei der Versorgung eines lebensbedrohten Früh- oder Neugeborenen nicht die richtigen Maßnahmen getroffen, kann dies einen lebenslangen Einfluss auf die weitere Entwicklung des Kindes haben. Gerade in der Kinderheilkunde ist daher die Durchführung von Simulationstrainings eine ethische Verpflichtung. Nur so können die notwendigen Erfahrungen und Fertigkeiten für die Versorgung kritisch kranker Früh- oder Neugeborener erworben werden, ohne das Leben oder die Gesundheit der Patienten zu gefährden. Der Qualitätsanspruch der heutigen Medizin erfordert es, dass auch seltene Ereignisse trainiert werden, um einerseits Leben zu retten und andererseits die Lebensqualität nach einer Notfallsituation zu verbessern.

Insbesondere die Beatmung von Früh- oder Neugeborenen gestaltet sich oftmals äußerst schwierig. Die Beatmung dient hierbei der Unterstützung oder dem Ersatz unzureichender oder nicht vorhandener Spontanatmung.

Einerseits kann zur Beatmung beispielsweise ein Beatmungsbeutel zum Einsatz kommen, der eine über Mund und Nase des Patienten zu legende Gesichtsmaske und einen an diese angeschlossenen elastischen, kompressiblen Beutel mit einem Ventil, welches den Luftstrom lenkt, umfasst.

Andererseits können in der Anästhesiologie und Intensivmedizin routinemäßig benutzte Beatmungsgeräte zur Anwendung gelangen, die eine zufriedenstellende mechanische Beatmung sicherstellen, wenn die Atemwege des Patienten mit einem Beatmungsschlauch offengehalten bzw. gesichert werden und wenn die Luft ungehindert in die Lungen und wieder herausströmen kann.

Maßnahmen zur Atemwegssicherung hängen von der individuellen Situation des Patienten ab. Den wirksamsten Schutz bietet die endotracheale Intubation. Bei der endotrachealen Intubation wird ein Endotrachealtubus beispielsweise durch den Mund in die Trachea eingebracht.

Die Effektivität der Beutelbeatmung ist abhängig vom Schwenkwinkel, d.h. dem Beugungs- bzw. Streckungsgrad des Halses. Ist der Schwenkwinkel zu klein oder zu groß, d.h. der Kopf zu wenig nach hinten geneigt bzw. zu weit überstreckt, gelangt die mittels des Beatmungsbeutels eingebrachte Luft tendenziell vermehrt in den Magen anstatt in die Lunge.

Im Falle der Beatmung mittels Endotrachealtubus und maschinellem Beatmungsgerät kann es vorkommen, dass der Tubus in die Speiseröhre anstatt in die Luftröhre eingeführt wird. Auch in diesem Fall wird die mittels des Beatmungsgeräts eingebrachte Luft in den Magen anstatt in die Lunge appliziert.

Solche Fehlbehandlungen sollten tunlichst vermieden werden und es ist daher von großem Interesse eine Möglichkeit zu schaffen, diverse Beatmungsszenarien an Säuglings- und Neugeborenensimulatoren zu trainieren.

Derzeit erhältliche Säuglings- und Neugeborenensimulatoren lassen die realitätsnahe Simulation der Beatmung mit gleichzeitiger Simulation der bei Fehlbehandlungen auftretenden Effekte aufgrund der geringen Größe und der so erforderlichen Miniaturisierung von Technik- und Steuerelementen nicht zu, wodurch am Simulator geübte Handhabungen nicht automatisch die Tätigkeiten in der Realität verbessern.

Die vorliegende Erfindung zielt daher darauf ab, einen Patientensimulator, insbesondere Frühgeborenensimulator dahingehend zu verbessern, dass die Realitätstreue verbessert und die Simulation verschiedenster Beatmungsszenarien auch bei einer kleinbauenden Ausführung für die Frühgeborenensimulation ermöglicht wird.

Zur Lösung dieser Aufgabe sieht die Erfindung gemäß Anspruch 1 vor, dass der Patientensimulator zumindest einen Sensor aufweist, dessen Sensordaten der Steuervorrichtung zugeführt sind, um zu erkennen, ob dem Patientensimulator zugeführtes Beatmungsgas in die Luftröhrennachbildung oder in die Speiseröhrennachbildung gelangt. Auf diese Weise kann der Patientensimulator die Korrektheit bzw. die Effektivität der vorgenommenen Beatmung überwachen, wobei die an die Steuervorrichtung übermittelten Sensordaten ausgewertet werden und der Simulator entsprechend der jeweiligen Sensordaten, welche die vorgenommene Beatmung widerspiegeln, realitätsgetreu reagieren kann. Insbesondere kann die Steuervorrichtung in Abhängigkeit von der detektierten Beatmung und deren Korrektheit bzw. Effektivität die Simulation von physiologischen Reaktionen des Körpers ansteuern, wie z.B. bei korrekter Beatmung ein Anheben und Absenken des Brustkorbes und bei falscher Beatmung eine nahezu fehlende Brustkorbaktivität und ggf. ein Anheben der Bauchdecke.

Im Hinblick auf die Ausgestaltung und Anordnung des wenigstens einen Sensors ist der erfindungsgemäße Patientensimulator in vorteilhafter Weise dahingehend weitergebildet, dass dieser eine Kehlkopfnachbildung aufweist und der zumindest eine Sensor in der Kehlkopfnachbildung angeordnet ist. Die Anordnung des Sensors in der Kehlkopfnachbildung des Simulators gewährleistet, dass die Beatmung direkt an der relevanten Stelle, d.h. dort wo der Tubus eingeführt wird, detektiert wird. Weiters bietet die Kehlkopfnachbildung ausreichend Platz um den zumindest einen Sensor anzubringen.

Der erfindungsgemäße Patientensimulator kann auch derart ausgebildet sein, dass der zumindest eine Sensor in oder an der anatomischen Luftröhrennachbildung oder der anatomischen Speiseröhrennachbildung angeordnet ist. Auch diese alternativen Anordnungsmöglichkeiten des Sensors dienen dazu, die Beatmung direkt zu detektieren.

In vorteilhafter Weise ist der erfindungsgemäße Patientensimulator dahingehend weitergebildet, dass der Patientensimulator eine Mehrzahl, vorzugsweise zumindest zwei Sensoren aufweist.

In vorteilhafter Weise ist der erfindungsgemäße Patientensimulator dahingehend weitergebildet, dass der zumindest eine Sensor ein im Bereich der Kehlkopfnachbildung oder im Bereich der Luftröhrennachbildung und/oder der Speiseröhrennachbildung angeordneter Näherungssensor ist, wobei im Fall von zwei gesonderten Sensoren sowohl der Luftröhrennachbildung als auch der Speiseröhrennachbildung jeweils ein eigener Näherungssensor zugeordnet werden kann. Diese bevorzugte Ausbildung dient dazu, die Effektivität des Beatmungszustandes mittels eines Endotrachealtubus bei Beutel- oder maschineller Beatmung zu simulieren. Die Effektivität mit Beatmungsgeräten ist - wie bereits oben erwähnt - abhängig vom Offenhalten bzw. Sichern der Atemwege, wobei dies mittels eines Endotrachealtubus sichergestellt werden kann. Wenn der Endotrachealtubus anstatt in die Luftröhre in die Speiseröhre eingeführt wird führt dies zu einer Fehlbeatmung, wobei die bei der Beatmung eingeblasene Luft den Bauchraum anstatt die Lunge erreicht. Mit Hilfe des wenigstens einen Näherungssensors kann in einfacher Weise detektiert werden, ob ein Endotrachealtubus in die Luftröhre oder in die Speiseröhre eingeführt wurde. Der wenigstens eine Näherungssensor kann z.B. als kapazitiver, induktiver, magnetischer oder optischer Näherungssensor ausgebildet sein.

Der erfindungsgemäße Patientensimulator ist bevorzugt dahingehend weitergebildet, dass eine mit der Thoraxnachbildung schwenkbar verbundene Kopfnachbildung vorgesehen ist und ein weiterer Sensor vorgesehen ist, der dazu ausgebildet ist, um den Schwenkwinkel der Kopfnachbildung relativ zur Thoraxnachbildung zu ermitteln. Diese bevorzugte Ausführungsform ermöglicht es, den Beatmungszustand bei einer Beutelbeatmung zu ermitteln und die entsprechenden physiologischen Folgen zu simulieren. Die Effektivität der Beutelbeatmung ist - wie bereits zuvor erwähnt - abhängig von der Genickneigung, d.h. dem Schwenkwinkel der Kopfnachbildung relativ zur Thoraxnachbildung. Wenn der Schwenkwinkel zu klein gewählt ist, d.h. die Kopfnachbildung relativ zur Thoraxnachbildung zu wenig nach hinten geneigt ist bzw. der Schwenkwinkel zu groß gewählt ist, d.h. die Kopfnachbildung relativ zur Thoraxnachbildung zu weit nach hinten geneigt bzw. überstreckt ist, verursacht dies Probleme bei der Beatmung, die der Simulator dadurch erkennt, dass die Kopfnachbildung des Simulators einen in Relation zur Thoraxnachbildung falschen Schwenkwinkel aufweist.

Der erfindungsgemäße Patientensimulator ist bevorzugt dahingehend weitergebildet, dass der weitere Sensor ein in der Kopfnachbildung angeordneter Beschleunigungs- und/oder Bewegungssensor, insbesondere eine inertiale Messeinheit, ist. Die vorgenannten Sensoren sind allesamt zur Detektion des Schwenkwinkels der Kopfnachbildung relativ zur Thoraxnachbildung geeignet. Ein Beschleunigungssensor bzw. eine inertiale Messeinheit (inertial measurement unit, IMU) misst eine insbesondere dreiachsige Beschleunigung, wodurch die beim Bewegen der Kopfnachbildung vorgenommene Verschwenkung erfasst werden und der aktuelle Relativwinkel der Kopfnachbildung zur Thoraxnachbildung errechnet werden kann. Der Relativwinkel bestimmt denjenigen Anteil der Luft, der in die Lunge gelangt, und denjenigen Anteil der Luft, der in den Magen gelangt. Die Steuervorrichtung hat in diesem Zusammenhang einen Algorithmus gespeichert, der den durch die Speiseröhre und den durch die Luftröhre gelangenden Luftanteil in Abhängigkeit vom Relativwinkel berechnet, wobei die Steuervorrichtung die Simulation der entsprechenden physiologischen Reaktionen des Körpers ansteuern kann, wie z.B. ein Anheben und Absenken des Brustkorbes und/oder Anheben der Bauchdecke.

Wie bereits erwähnt, mündet sowohl die Luftröhrennachbildung als auch die Speiseröhrennachbildung in eine Kavität, welche z.B. mit Drucksensoren ausgestattet sein kann, um den bei der Beatmung in der Lunge oder bei fehlerhafter Beatmung im Magen entstehenden Druck zu ermitteln und dadurch die Effektivität der Beatmung zu messen. Die Kavität dient auch der Darstellung der Druckzustände in der Lunge oder im Magen, wobei z.B. ein erhöhter Druck beim Beatmen als Druckwiderstand spürbar wird. Der erfindungsgemäße Patientensimulator ist in diesem Zusammenhang bevorzugt dahingehend weitergebildet, dass die Kavität, in welche die Luftröhrennachbildung mündet, und ggf. die Kavität, in welche die Speiseröhrennachbildung mündet, im Lungensimulator angeordnet ist. Dies ermöglich eine besonders platzsparende Ausbildung, da durch Anordnung der Kavität bzw. ggf. der Kavitäten im Lungensimulator auf die Ausbildung eines Magensimulators, der eine eigene Kavität besitzt, oder auf das Ausbilden einer irgendwo anders innerhalb oder außerhalb des Simulators befindlichen Kavität verzichtet werden kann. Hierdurch wird erreicht, dass die Simulation verschiedenster Beatmungsszenarien auch bei einer kleinbauenden Ausführung für die Frühgeborenensimulation ermöglicht wird.

Der erfindungsgemäße Patientensimulator ist bevorzugt dahingehend weitergebildet, dass die Kavität, in welche die Luftröhrennachbildung mündet, und die Kavität, in welche die Speiseröhrennachbildung mündet, von derselben Kavität des Lungensimulators gebildet ist. Mittels einer einzigen Kavität, die im Lungensimulator angeordnet ist und in welche sowohl die Luftröhrennachbildung als auch die Speiseröhrennachbildung mündet, wird eine weitere Platzersparnis und daher eine besonders kleinbauende Ausführung des Simulators ermöglicht.

In vorteilhafter Weise ist der erfindungsgemäße Patientensimulator hierbei dahingehend weitergebildet, dass ein erstes Sperrorgan zum Absperren oder Freigeben des Gasflusses über die Luftröhrennachbildung in die Kavität des Lungensimulators und ein zweites Sperrorgan zum Absperren oder Freigeben des Gasflusses über die Speiseröhrennachbildung in die Kavität des Lungensimulators vorgesehen sind, wobei das erste und das zweite Sperrorgan ausgebildet sind, um von der Steuervorrichtung angesteuert zu werden. Die Sperrorgane dienen dabei dazu, den Gas- bzw. Luftfluss bei Vorliegen einer einzigen Kavität, in die sowohl die Luftröhrennachbildung als auch die Speiseröhrennachbildung münden, in geeigneter Weise zu kontrollieren, um zu verhindern, dass die durch die Luftröhrennachbildung in die Kavität geleitete Luft über die Speiseröhrennachbildung entweicht und umgekehrt die durch die Speiseröhrennachbildung in die Kavität geleitete Luft über die Luftröhrennachbildung entweicht. Ein Entweichen würde die Druckverhältnisse in der Kavität verändern.

Der erfindungsgemäße Patientensimulator ist hierbei bevorzugt dahingehend weitergebildet, dass die Steuervorrichtung derart mit dem ersten und dem zweiten Sperrorgan zusammenwirkt, dass das erste Sperrorgan geschlossen wird und das zweite Sperrorgan geöffnet wird oder bleibt, wenn detektiert wird, dass dem Patientensimulator zugeführtes Beatmungsgas in die Speiseröhrennachbildung gelangt.

Der erfindungsgemäße Patientensimulator ist bevorzugt dahingehend weitergebildet, dass die Steuervorrichtung derart mit dem ersten und dem zweiten Sperrorganen zusammenwirkt, dass das zweite Sperrorgan geschlossen wird und das erste Sperrorgan geöffnet wird oder bleibt, wenn detektiert wird, dass dem Patientensimulator zugeführtes Beatmungsgas in die Luftröhrennachbildung gelangt.

Die vom jeweiligen Sensor detektieren Informationen werden der Steuervorrichtung zugeführt, welche wiederum - je nachdem, ob eine korrekte Beatmung über die Luftröhrennachbildung oder eine fehlerhafte Förderung von Luft in die Speiseröhrennachbildung - das dementsprechende Sperrorgan ansteuert. Wenn die Kopfnachbildung in Relation zur Thoraxnachbildung des Simulators zu stark oder zu wenig geneigt ist bzw. der Tubus irrtümlich in den Speiseröhrennachbildung eingeführt wurde und das dem Simulator zugeführte Beatmungsgas demgemäß in die Speiseröhrennachbildung gelangt, wirkt die Steuervorrichtung derart mit dem ersten und dem zweiten Sperrorgan zusammen, dass das erste Sperrorgan geschlossen wird und das zweite Sperrorgan geöffnet wird und demgemäß lediglich eine Beatmung des Magens und nicht eine Beatmung des Lungenraumes simuliert wird.

Wenn hingegen die Kopfnachbildung in Relation zur Thoraxnachbildung des Simulators den richtigen Neigungswinkel aufweist bzw. der Tubus richtigerweise in die Luftröhrennachbildung eingeführt wurde und das dem Simulator zugeführte Beatmungsgas demgemäß in die Luftröhrennachbildung gelangt, wirkt die Steuervorrichtung derart mit dem ersten und dem zweiten Sperrorgan zusammen, dass das zweite Sperrorgan geschlossen und das erste Sperrorgan geöffnet wird oder bleibt und demgemäß eine Beatmung des Lungenraumes und nicht eine Beatmung des Magens simuliert wird.

Als Sperrorgan kann beispielsweise ein Ventil fungieren. Der erfindungsgemäße Patientensimulator ist dahingehend weitergebildet, dass ein vom Lungensimulator unabhängig ansteuerbarer Hub- und Senkantrieb für das wenigstens eine heb- und senkbare Brustkorbelement vorgesehen ist. Dadurch, dass das Anheben und Absenken des Brustkorbelements mechanisch nicht mit der Ausdehnung oder Entleerung der Nachbildung der Lungenkavität gekoppelt ist, sondern davon unabhängig angesteuert wird, wird die Möglichkeit geboten, die Kavität des Lungensimulators, wie oben beschrieben, auch für die Simulation einer fehlerhaften Beatmung, bei der die Luft in den Magen gelangt, mitzuverwenden.

Allgemein gelingt es auf Grund der genannten Unabhängigkeit der Ansteuerung des Brustkorbelements, den Lungensimulator und die Simulation der Brustkorbhebung und -senkung als funktional getrennte Einheiten auszubilden, die gesondert voneinander zur Durchführung von Simulationsvorgängen angesteuert werden können.

Der erfindungsgemäße Patientensimulator ist dahingehend weitergebildet, dass die Steuervorrichtung mit dem Heb- und Senkantrieb für das wenigstens eine heb- und senkbare Brustkorbelement und mit einem Heb- und Senkantrieb für das heb- und senkbare Bauchdeckenelement zusammenwirkt. Die Steuervorrichtung kann daher, je nachdem, ob eine korrekte oder eine fehlerhafte Beatmung festgestellt wurde, das Brustkorbelement oder das Bauchdeckenelement ansteuern.

Die Erfindung sieht in diesem Zusammenhang vor, dass die Steuervorrichtung ausgebildet ist, um den Antrieb des heb- und senkbaren Bauchdeckenelements zu einem Anheben des Bauchdeckenelements anzusteuern, wenn detektiert wird, dass dem Patientensimulator zugeführtes Beatmungsgas in die Speiseröhrennachbildung gelangt. Hierdurch ist es möglich den anatomisch korrekten Zustand bei Fehlbeatmung darzustellen.

In vorteilhafter Weise ist der erfindungsgemäße Patientensimulator dahingehend weitergebildet, dass die Steuervorrichtung ausgebildet ist, die Anhebung des Bauchdeckenelements in Abhängigkeit vom Schwenkwinkel der Kopfnachbildung relativ zur Thoraxnachbildung zu steuern.

Der erfindungsgemäße Patientensimulator ist bevorzugt dahingehend weitergebildet, dass wenigstens ein Sensor zur Messung des Zustands des Lungensimulators, insbesondere wenigstens ein Drucksensor zur Messung des Drucks in der Kavität des Lungensimulators, vorgesehen ist, dessen Signale der Steuereinrichtung zur Ansteuerung des Hub- und Senkantriebs für das wenigstens eine heb- und senkbare Brustkorbelement zugeführt sind, um das wenigstens eine heb- und senkbare Brustkorbelement in Abhängigkeit von den Signalen anzuheben und abzusenken, wenn detektiert wird, dass dem Patientensimulator zugeführtes Beatmungsgas in die Luftröhrennachbildung gelangt, wobei der Drucksensor bevorzugt angeordnet und ausgebildet ist, um den Beatmungsdruck zu ermitteln.

Zur Simulation physiologisch normaler Zustände des Atemsystems, insbesondere der Lunge, wird die Hub- und Senkmechanik der Thoraxnachbildung bei Feststellen einer korrekten Beatmung so angesteuert, dass sich das wenigstens eine heb- und senkbare Brustkorbelement synchron mit der Luftfüllung und -entleerung des Lungensimulators hebt und senkt. Dies ist insbesondere bei der Durchführung von Beatmungsübungen mit dem Patientensimulator der Fall.

Der Lungensimulator kann hierzu bevorzugt zwei Kavitäten, aufweisen nämlich eine zur Simulation des rechten Lungenflügels und eine zur Simulation des linken Lungenflügels, die beide über die Luftröhrennachbildung mit Luft aus einem Beatmungsgerät befüllbar sind, wobei Drucksensoren zur Messung des Drucks in der bzw. den Kavität(en) vorgesehen sind. Die Signale des bzw. der Drucksensors/en sind bevorzugt der Steuereinrichtung zur Ansteuerung der Hub- und Senkmechanik der Thoraxnachbildung zugeführt, um das wenigstens eine heb- und senkbare Brustkorbelement in Abhängigkeit von den Drucksignalen anzuheben und abzusenken. Die Drucksensoren sind bevorzugt angeordnet und ausgebildet, um den Beatmungsdruck und das Beatmungsvolumen zu ermitteln. Die wenigstens eine Kavität des Lungensimulators ist zu diesem Zweck bevorzugt im Volumen verstellbar ausgebildet. Das Volumen kann gemäß den physikalischen Grundlagen der Compliance und Resistance dynamisch angepasst werden. Die Berechnung des aktuellen Volumens basiert z.B. auf einem angepassten Algorithmus innerhalb eines Mikrocontrollers. Zur Einstellung der physiologischen und pathologischen Atemparameter des Lungensimulators ist bevorzugt ein elektrischer Antrieb vorgesehen.

Der erfindungsgemäße Patientensimulator ist bevorzugt dahingehend weitergebildet, dass der Lungensimulator wenigstens ein Stellelement zur Einstellung der Compliance und/oder wenigstens ein Stellelement zur Einstellung der Resistance aufweist, wobei vorzugsweise die Steuervorrichtung derart mit dem Stellelement zur Einstellung der Compliance zusammenwirkt, dass eine Verringerung der Compliance der Lunge simuliert wird, wenn der Heb- und Senkantrieb für das heb- und senkbare Bauchdeckenelement zum Anheben des Bauchdeckenelements angesteuert wird. Dadurch kann bei einer Fehlbeatmung in den Magen zusätzlich zur Anhebung der Bauchdecke simuliert werden, dass ein Aufblähen des Magens einen Druck auf die Lunge bewirkt, wodurch die Lunge in der Folge zusammengepresst wird.

Die Nachstellung der Lunge kann hierbei durch eine Kammer mit einem steuerbaren Kolben gebildet sein, der das nachgestellte Lungenvolumen in Abhängigkeit von Druck und Zeit variieren kann, wobei durch Veränderung der Druckbeaufschlagung des Kolbens sowohl die Compliance als auch die Resistance eingestellt werden können.

Die Erfindung wird nachfolgend anhand von in der Zeichnung schematisch dargestellten Ausführungsbeispielen näher erläutert. In dieser zeigt Fig.1 eine Schnittansicht des erfindungsgemäßen Patientensimulators, Fig.2 ein Fließdiagramm der Steuerung des Lungensimulators mit davon getrennt ansteuerbarer Hub- und Senkmechanik der Brustkorbnachbildung und Fig.3 eine weitere Schnittansicht des erfindungsgemäßen Patientensimulators.

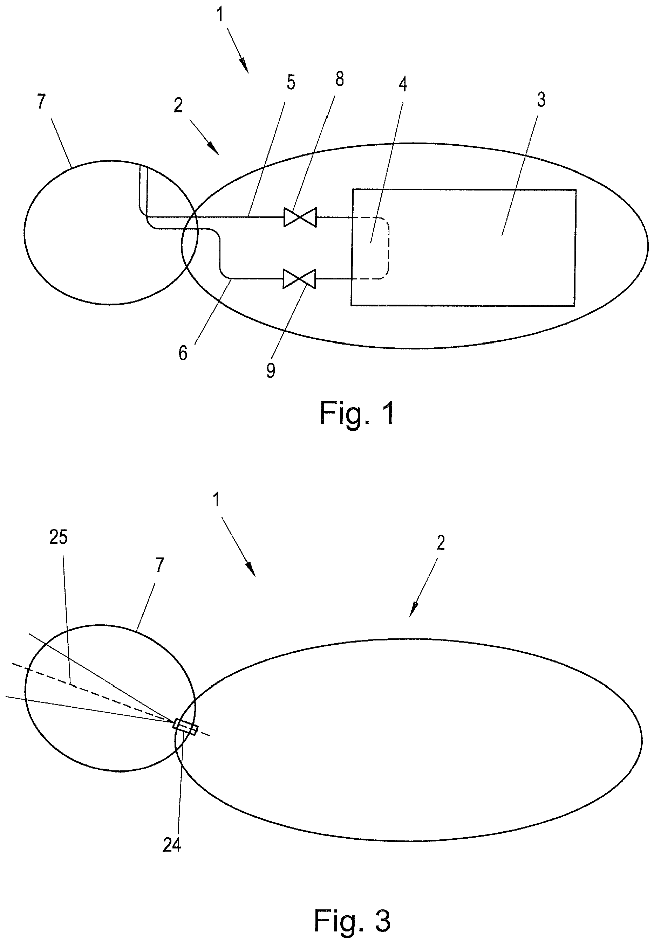

Fig.1 zeigt den erfindungsgemäßen Patientensimulator 1, der eine Thoraxnachbildung 2, die eine Brustkorbnachbildung mit wenigstens einem heb- und senkbaren Brustkorbelement (in Fig.1 nicht gezeigt) zur Simulation einer Brustkorbhebung und -senkung aufweist, eine Bauchdeckenmechanik (in Fig.1 nicht gezeigt), die eine Bauchdeckennachbildung mit wenigstens einem heb- und senkbaren Bauchdeckenelement zur Simulation einer Bauchdeckenhebung und -senkung aufweist, einen Lungensimulator 3, eine in eine Kavität 4 des Lungensimulators 3 mündende anatomische Luftröhrennachbildung 5 und eine in dieselbe Kavität 4 des Lungensimulators 3 mündende anatomische Speiseröhrennachbildung 6 umfasst. Weiters besitzt der Simulator eine mit der Thoraxnachbildung 2 schwenkbar verbundene Kopfnachbildung 7, sowie ein erstes Sperrorgan 8 zum Absperren oder Freigeben des Gasflusses über die Luftröhrennachbildung 5 in die Kavität 4 des Lungensimulators 3 und ein zweites Sperrorgan 9 zum Absperren oder Freigeben des Gasflusses über die Speiseröhrennachbildung 6 in die Kavität 4 des Lungensimulators 3.

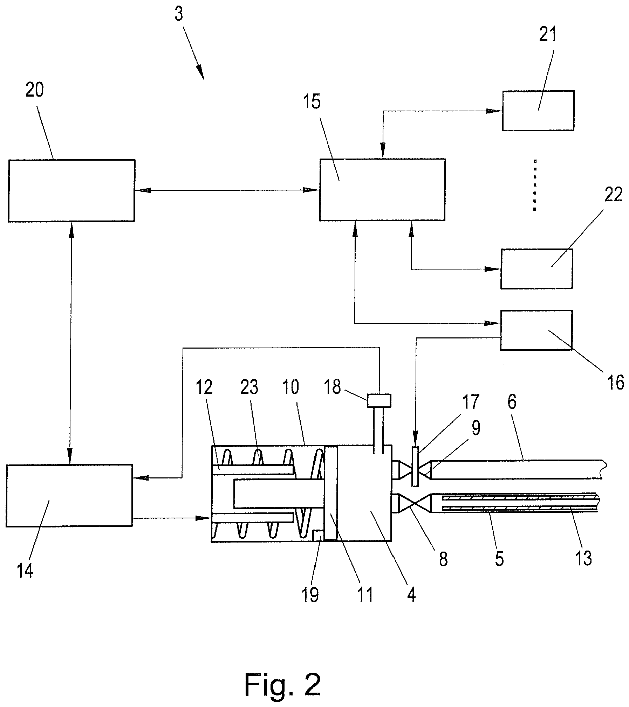

Fig. 2 zeigt ein Fließdiagramm der Steuerung des Lungensimulators mit davon getrennt ansteuerbarer Hub- und Senkmechanik der Brustkorbnachbildung.

In dieser bevorzugten Ausführungsform umfasst der Lungensimulator 3 einen starrwandigen, vorzugsweise metallischen Zylinder 10, in dem ein Kolben 11 mit Hilfe eines Antriebs 12 (z.B. Schrittmotor) in axialer Richtung verstellbar angeordnet ist. Der Kolben 11 begrenzt ein Arbeitsvolumen bzw. eine Kavität 4 des Lungensimulators 3, in welche die Nachbildung einer Luftröhre 5 und einer Speiseröhre 6 münden. In beide Röhren kann ein Tubus 13 eingeführt werden (in Fig.2 im in die Luftröhre eingeführten Zustand gezeigt). Am Übergang der Luftröhre 5 und der Speiseröhre 6 in die Kavität 4 befinden sich ein erstes Sperrorgan 8 zum Absperren oder Freigeben des Gasflusses über die Luftröhrennachbildung 5 in die Kavität 4 des Lungensimulators 3 und ein zweites Sperrorgan 9 zum Absperren oder Freigeben des Gasflusses über die Speiseröhrennachbildung 6 in die Kavität 4 des Lungensimulators 3.

Sensoren (in Fig.2 nicht dargestellt) in der Nachbildung des Kehlkopfes (in Fig.2 nicht dargestellt) erkennen, ob der Tubus 13, korrekt in die Luftröhrennachbildung 5 eingeführt wurde oder fälschlicherweise in die Speiseröhrennachbildung 6. Im Zusammenspiel mit der computerunterstützen Steuereinrichtung 14 und in weiterer Folge mit der Animationssteuerung 15 wird ein Motor 16 angesteuert. Der Motor 16 bewegt eine Verriegelung 17 derart, dass sich im Falle der Beatmung über die Luftröhrennachbildung 5, in welcher sich der Tubus 13 befindet, das Sperrorgan 8 öffnet und das Sperrorgan 9 schließt. Luft wird somit über die Luftröhrennachbildung 5 in die Kavität 4 des Lungensimulators 3 eingeblasen.

In Fig.2 ist weiters ein Drucksensor 18 mit Überdruckventil (in Fig.2 nicht dargestellt) zur Begrenzung des maximal zulässigen Drucks gezeigt, der der Messung des Drucks in der Kavität 4 dient, welcher an die Steuereinrichtung 14 übermittelt wird. Mit dem physiologischen Rechenmodell 20 können daraus Informationen betreffend die Compliance und die Resistance errechnet werden bzw. umgekehrt können aus einem vorgegebenen Compliancewert und einem vorgegebenen Resistancewert entsprechende Werte für den Druck, den Volumenstrom und das Volumen errechnet werden.

Das physiologische Rechenmodell 20 ist ausgebildet, um aus den Werten für Compliance, Resistance und Atempathologien (z.B. Schaukelatmung) das aktuelle Füllvolumen zu definieren und weiters gesondert die Positionsdaten für die momentane Position der Brustkorbnachbildung und der Bauchplatte zu generieren, die der Animationssteuerung 15 geführt werden. In der Animationssteuerung 15 werden daraus Steuersignale für die mit der Brustkorbnachbildung zusammenwirkende Hub- und Senkmechanik 21 und für die mit der Bauchplatte zusammenwirkende Hub- und Senkmechanik 22 generiert, sodass die Simulation der Atembewegungen synchron mit und entsprechend dem Simulationszustand des Lungensimulator 3 erfolgt.

Im metallischen Zylinder 10 ist weiters eine Feder 23, z.B. eine Vorspannfeder angeordnet, die den Kolben 11 in einer Grundposition hält und eine Grundcompliance sicherstellt.

Fig.3 zeigt eine Schnittansicht des erfindungsgemäßen Patientensimulators 1 mit einer mit der Thoraxnachbildung 2 schwenkbar verbundene Kopfnachbildung 7 und eine Kehlkopfnachbildung 24, in welcher sich ein Sensor zu Ermittlung des Schwenkwinkels der Kopfnachbildung 7 relativ zur Thoraxnachbildung 2 befindet. In Fig.3 beträgt der Schwenkwinkel (strichlierte Linie 25) der Kopfnachbildung 7 relativ zur Thoraxnachbildung 2 etwa 20°.

## Patentansprüche

1. Patientensimulator, insbesondere Frühgeborenen-, Neugeborenen- oder Kindersimulator, umfassend eine Thoraxnachbildung (2), die eine Brustkorbnachbildung mit wenigstens einem heb- und senkbaren Brustkorbelement zur Simulation einer Brustkorbhebung und -senkung aufweist, eine Bauchdeckenmechanik, die eine Bauchdeckennachbildung mit wenigstens einem heb- und senkbaren Bauchdeckenelement zur Simulation einer Bauchdeckenhebung und -senkung aufweist, einen Lungensimulator (3), eine in eine Kavität (4) mündende anatomische Luftröhrennachbildung (5), eine in eine Kavität mündende anatomische Speiseröhrennachbildung (6) und eine Steuervorrichtung (14), **dadurch gekennzeichnet, dass** der Patientensimulator (1) zumindest einen Sensor aufweist, dessen Sensordaten der Steuervorrichtung (14) zugeführt sind, um zu erkennen, ob dem Patientensimulator (1) zugeführtes Beatmungsgas in die Luftröhrennachbildung (5) oder in die Speiseröhrennachbildung (6) gelangt, wobei ein vom Lungensimulator (3) unabhängig ansteuerbarer Hub- und Senkantrieb (21) für das wenigstens eine heb- und senkbare Brustkorbelement vorgesehen ist, die Steuervorrichtung (14) mit dem Heb- und Senkantrieb (21) für das wenigstens eine heb- und senkbare Brustkorbelement und mit einem Heb- und Senkantrieb (22) für das heb- und senkbare Bauchdeckenelement zusammenwirkt und die Steuervorrichtung (14) ausgebildet ist, um den Antrieb (22) des heb- und senkbaren Bauchdeckenelements zu einem Anheben des Bauchdeckenelements anzusteuern, wenn detektiert wird, dass dem Patientensimulator (1) zugeführtes Beatmungsgas in die Speiseröhrennachbildung (6) gelangt.

2. Patientensimulator nach Anspruch 1, **dadurch gekennzeichnet, dass** der Patientensimulator (1) eine Kehlkopfnachbildung (24) aufweist und der zumindest eine Sensor in der Kehlkopfnachbildung (24) angeordnet ist.

3. Patientensimulator nach Anspruch 1, **dadurch gekennzeichnet, dass** der zumindest eine Sensor in oder an der anatomischen Luftröhrennachbildung (5) oder der anatomischen Speiseröhrennachbildung (6) angeordnet ist.

4. Patientensimulator nach einem der Ansprüche 1 bis 3, **dadurch gekennzeichnet, dass** der Patientensimulator (1) eine Mehrzahl, vorzugsweise zumindest zwei Sensoren aufweist.

5. Patientensimulator nach einem der Ansprüche 1 bis 4, **dadurch gekennzeichnet, dass** eine mit der Thoraxnachbildung (2) schwenkbar verbundene Kopfnachbildung (7) und ein weiterer Sensor vorgesehen ist, wobei der weitere Sensor ausgebildet ist, um den Schwenkwinkel (25) der Kopfnachbildung (7) relativ zur Thoraxnachbildung (2) zu ermitteln.

6. Patientensimulator nach Anspruch 5, **dadurch gekennzeichnet, dass** der weitere Sensor ein in der Kopfnachbildung (7) angeordneter Beschleunigungs- und/oder Bewegungssensor, insbesondere eine inertiale Messeinheit, ist.

7. Patientensimulator nach einem der Ansprüche 1 bis 4, **dadurch gekennzeichnet, dass** der zumindest eine Sensor ein im Bereich der Kehlkopfnachbildung (24) oder im Bereich der Luftröhrennachbildung (5) und/oder der Speiseröhrennachbildung (6) angeordneter Näherungssensor ist.

8. Patientensimulator nach einem der Ansprüche 1 bis 7, **dadurch gekennzeichnet, dass** die Kavität (4), in welche die Luftröhrennachbildung (5) mündet, und ggf. die Kavität, in welche die Speiseröhrennachbildung (6) mündet, im Lungensimulator (3) angeordnet ist.

9. Patientensimulator nach Anspruch 8, **dadurch gekennzeichnet, dass** die Kavität (4), in welche die Luftröhrennachbildung (5) mündet, und die Kavität, in welche die Speiseröhrennachbildung (6) mündet, von derselben Kavität (4) des Lungensimulators (3) gebildet ist.

10. Patientensimulator nach Anspruch 9, **dadurch gekennzeichnet, dass** ein erstes Sperrorgan (8) zum Absperren oder Freigeben des Gasflusses über die Luftröhrennachbildung (5) in die Kavität (4) des Lungensimulators (3) und ein zweites Sperrorgan (9) zum Absperren oder Freigeben des Gasflusses über die Speiseröhrennachbildung (6) in die Kavität des Lungensimulators (3) vorgesehen sind, wobei das erste und das zweite Sperrorgan (8,9) ausgebildet sind, um von der Steuervorrichtung (14) angesteuert zu werden.

11. Patientensimulator nach Anspruch 10, **dadurch gekennzeichnet, dass** die Steuervorrichtung (14) derart mit dem ersten und dem zweiten Sperrorgan (8,9) zusammenwirkt, dass das erste Sperrorgan (8) geschlossen wird und das zweite Sperrorgan (9) geöffnet wird oder bleibt, wenn detektiert wird, dass dem Patientensimulator (1) zugeführtes Beatmungsgas in die Speiseröhrennachbildung (6) gelangt.

12. Patientensimulator nach Anspruch 10, **dadurch gekennzeichnet, dass** die Steuervorrichtung (14) derart mit dem ersten und dem zweiten Sperrorganen (8,9) zusammenwirkt, dass das zweite Sperrorgan (9) geschlossen wird und das erste Sperrorgan (8) geöffnet wird oder bleibt, wenn detektiert wird, dass dem Patientensimulator zugeführtes Beatmungsgas in die Luftröhrennachbildung (5) gelangt.

13. Patientensimulator nach einem der Ansprüche 1 bis 12, **dadurch gekennzeichnet, dass** wenigstens ein Sensor zur Messung des Zustands des Lungensimulators (3), insbesondere wenigstens ein Drucksensor (18) zur Messung des Drucks in der Kavität (4) des Lungensimulators (3), vorgesehen ist, dessen Signale der Steuereinrichtung (14) zur Ansteuerung des Hub- und Senkantriebs (21) für das wenigstens eine heb- und senkbare Brustkorbelement zugeführt sind, um das wenigstens eine heb-und senkbare Brustkorbelement in Abhängigkeit von den Signalen anzuheben und abzusenken, wenn detektiert wird, dass dem Patientensimulator (1) zugeführtes Beatmungsgas in die Luftröhrennachbildung (5) gelangt, wobei der Drucksensor (18) bevorzugt angeordnet und ausgebildet ist, um den Beatmungsdruck zu ermitteln.

14. Patientensimulator nach einem der Ansprüche 1 bis 13, **dadurch gekennzeichnet, dass** die Steuervorrichtung (14) ausgebildet ist, die Anhebung des Bauchdeckenelements in Abhängigkeit vom Schwenkwinkel (25) der Kopfnachbildung (7) relativ zur Thoraxnachbildung (2) zu steuern.

15. Patientensimulator nach einem der Ansprüche 1 bis 14, **dadurch gekennzeichnet, dass** der Lungensimulator (3) wenigstens ein Stellelement zur Einstellung der Compliance und/oder wenigstens ein Stellelement zur Einstellung der Resistance aufweist, wobei vorzugsweise die Steuervorrichtung (14) derart mit dem Stellelement zur Einstellung der Compliance zusammenwirkt, dass eine Verringerung der Compliance der Lunge simuliert wird, wenn der Heb- und Senkantrieb (22) für das heb-und senkbare Bauchdeckenelement zum Anheben des Bauchdeckenelements angesteuert wird.

## Claims

1. Patient simulator, in particular premature infant, newborn or infant simulator, comprising a thorax replication (2), which comprises a chest replication with at least one liftable and lowerable chest element for simulating a lifting and lowering of the thorax, abdominal wall mechanics, which comprises an abdominal wall replication with at least one liftable and lowerable abdominal wall element for simulating a lifting and lowering of the abdominal wall, a lung simulator (3), an anatomical trachea replication (5) opening out into a cavity (4), an anatomical oesophagus replication (6) opening out into a cavity, and a control unit (14), **characterized in that** the patient simulator (1) includes at least one sensor whose sensor data is transmitted to the control unit (14) to determine whether the ventilation gas supplied to the patient simulator (1) is conducted into the trachea replication (5) or into the oesophagus replication (6), wherein a lifting and lowering drive (21), which can be activated independently of the lung simulator (3), is provided for the at least one liftable and lowerable chest element, the control unit (14) interacts with the lifting and lowering drive (21) for the at least one liftable and lowerable chest element and with a lifting and lowering drive (22) for the liftable and lowerable abdominal wall element and the control unit (14) is designed such that it can actuate the drive (22) of the liftable and lowerable abdominal wall element for lifting the abdominal wall element if it is detected that the ventilation gas supplied to the patient simulator (1) enters the oesophagus replication (6).

2. Patient simulator according to claim 1, **characterized in that** the patient simulator (1) comprises a larynx replication (24) and that the at least one sensor is located in the larynx replication (24).

3. Patient simulator according to claim 1, **characterized in that** the at least one sensor is located in or at the anatomical trachea replication (5) or the anatomical oesophagus replication (6).

4. Patient simulator according to any one of claims 1 to 4, **characterized in that** the patient simulator (1) comprises multiple, preferably at least two sensors.

5. Patient simulator according to any one of claims 1 to 4, **characterized in that** it comprises a head replication (7), which is connected to the thorax replication (2) in a swivelling manner, and an additional sensor, wherein the additional sensor is designed such that it detects the swivelling angle (25) of the head replication (7) relatively to the thorax replication (2).

6. Patient simulator according to claim 5, **characterized in that** the additional sensor, which is located in the head replication (7), is an acceleration and/or movement sensor, in particular an inertial measurement unit.

7. Patient simulator according to any one of claims 1 to 4, **characterized in that** the at least one sensor is a proximity sensor located in the area of the larynx replication (24) or in the area of the trachea replication (5) and/or in the oesophagus replication (6).

8. Patient simulator according to any one of claims 1 to 7, **characterized in that** the cavity (4) into which the trachea replication (5) opens out and, if applicable, the cavity into which the oesophagus replication opens out are located in the lung simulator (3).

9. Patient simulator according to claim 8, **characterized in that** the cavity (4) into which the trachea replication (5) opens out and the cavity into which the oesophagus replication (6) opens out are formed by the same cavity (4) of the lung simulator (3).

10. Patient simulator according to claim 9, **characterized in that** a first blocking element (8) for blocking or releasing the gas flow via the trachea replication (5) into the cavity (4) of the lung simulator (3) and a second blocking element (9) for blocking or releasing the gas flow via the oesophagus replication (6) into the cavity of the lung simulator (3) are provided, wherein the first and the second blocking element (8,9) are arranged in a way that they can be activated by the control unit (14).

11. Patient simulator according to claim 10, **characterized in that** the control unit (14) interacts with the first and the second blocking element (8,9) such that the first blocking element (8) is closed and the second blocking element (9) is opened or remains open if it is detected that the ventilation gas supplied to the patient simulator (1) enters the oesophagus replication (6).

12. Patient simulator according to claim 10, **characterized in that** the control unit (14) interacts with the first and the second blocking elements (8,9) such that the second blocking element (9) is closed and the first blocking element (8) is opened or remains open if it is detected that the ventilation gas supplied to the patient simulator (1) enters the trachea replication (5).

13. Patient simulator according to any one of claims 1 to 12, **characterized in that** at least one sensor for measuring the condition of the lung simulator (3), in particular at least one pressure sensor (18) for measuring the pressure in the cavity (4) of the lung simulator (3), is provided and that the signals of such sensor are transmitted to the control unit (14) for activating the lifting and lowering drive (21) for the at least one liftable and lowerable chest element to lift and lower the at least one liftable and lowerable chest element depending on the signals if it is detected that the ventilation gas supplied to the patient simulator (1) enters the trachea replication (5), wherein the pressure sensor (18) is preferably located and designed in a way that it determines the ventilation pressure.

14. Patient simulator according to any one of claims 1 to 13, **characterized in that** the control unit (14) is designed such that it can control the lifting of the abdominal wall element depending on the swivelling angle (25) of the head replication (7) relatively to the thorax replication (2).

15. Patient simulator according to any one of claims 1 to 14, **characterized in that** the lung simulator (3) comprises at least one control member for setting the compliance and/or at least one control member for setting the resistance wherein, preferably, the control unit (14) interacts with the control member for setting the compliance such that a reduction in the compliance of the lung is simulated if the lifting and lowering drive (22) for the liftable and lowerable abdominal wall element is activated for lifting the abdominal wall element.

## Revendications

1. Simulateur de patient, en particulier simulateur de prématurés, nouveau-nés ou enfants, comprenant une reproduction de thorax (2), qui comprend une reproduction de la cage thoracique comprenant au moins un élément de cage thoracique pouvant être soulevé et abaissé pour simuler un soulèvement et un abaissement de la cage thoracique, une mécanique de paroi abdominale, qui comprend une reproduction de paroi abdominale comprenant au moins un élément de paroi abdominale pouvant être soulevé et abaissé pour simuler un soulèvement et un abaissement de la paroi abdominale, un simulateur pulmonaire (3), une reproduction anatomique de la trachée (5) débouchant dans une cavité (4), une reproduction anatomique de l'œsophage (6) débouchant dans une cavité et un dispositif de commande (14), **caractérisé en ce que** le simulateur de patient (1) comprend au moins un capteur, dont les données de capteur sont transmises au dispositif de commande (14) pour déterminer si du gaz respiratoire amené au simulateur de patient (1) entre dans la reproduction de la trachée (5) ou dans la reproduction de l'œsophage (6), dans lequel il est prévu un entraînement de soulèvement et d'abaissement (21), apte à être commandé indépendamment du simulateur pulmonaire (3), pour l'au moins un élément de cage thoracique pouvant être soulevé et abaissé, le dispositif de commande (14) coopère avec l'entraînement de soulèvement et d'abaissement (21) pour l'au moins un élément de cage thoracique pouvant être soulevé et abaissé et avec un entraînement de soulèvement et d'abaissement (22) pour l'élément de paroi abdominale pouvant être soulevé et abaissé, et le dispositif de commande (14) est conçu pour commander l'entraînement (22) de l'élément de paroi abdominale pouvant être soulevé et abaissé pour soulever l'élément de paroi abdominale, lorsqu'il est détecté que du gaz respiratoire amené au simulateur de patient (1) entre dans la reproduction de l'œsophage (6).

2. Simulateur de patient selon la revendication 1, **caractérisé en ce que** le simulateur de patient (1) comprend une reproduction du larynx (24) et l'au moins un capteur est agencé dans la reproduction du larynx (24).

3. Simulateur de patient selon la revendication 1, **caractérisé en ce que** l'au moins un capteur est agencé dans ou sur la reproduction anatomique de la trachée (5) ou la reproduction anatomique de l'œsophage (6).

4. Simulateur de patient selon l'une des revendications 1 à 3, **caractérisé en ce que** le simulateur de patient (1) comporte une pluralité de capteurs, de préférence au moins deux capteurs.

5. Simulateur de patient selon l'une des revendications 1 à 4, **caractérisé en ce qu'**il est prévu une reproduction de tête (7) qui est reliée de manière pivotante à la reproduction de thorax (2), et un capteur additionnel, dans lequel le capteur additionnel est conçu pour déterminer l'angle de pivotement (25) de la reproduction de tête (7) par rapport à la reproduction de thorax (2).

6. Simulateur de patient selon la revendication 5, **caractérisé en ce que** le capteur additionnel est un capteur d'accélération et/ou de mouvement agencé dans la reproduction de tête (7), en particulier une unité de mesure inertielle.

7. Simulateur de patient selon l'une des revendications 1 à 4, **caractérisé en ce que** l'au moins un capteur est un capteur de proximité agencé dans la proximité de la reproduction du larynx (24) ou dans la proximité de la reproduction de la trachée (5) et/ou la reproduction de l'œsophage (6).

8. Simulateur de patient selon l'une des revendications 1 à 7, **caractérisé en ce que** la cavité (4) dans laquelle débouche la reproduction de la trachée (5), et le cas échéant la cavité dans laquelle débouche la reproduction de l'œsophage (6), est agencé dans le simulateur pulmonaire (3).

9. Simulateur de patient selon la revendication 8, **caractérisé en ce que** la cavité (4) dans laquelle débouche la reproduction de la trachée (5), et la cavité dans laquelle débouche la reproduction de l'œsophage (6), sont constituées par la même cavité (4) du simulateur pulmonaire (3).

10. Simulateur de patient selon la revendication 9, **caractérisé en ce qu'**il est prévu un premier organe de blocage (8) pour bloquer ou débloquer le flux de gaz sur la reproduction de la trachée (5) dans la cavité (4) du simulateur pulmonaire (3) et un deuxième organe de blocage (9) pour bloquer ou débloquer le flux de gaz sur la reproduction de l'œsophage (6) dans la cavité du simulateur pulmonaire (3), dans lequel les premier et deuxième organes de blocage (8, 9) sont conçus pour être commandés par le dispositif de commande (14).

11. Simulateur de patient selon la revendication 10, **caractérisé en ce que** le dispositif de commande (14) coopère avec les premier et deuxième organes de blocage (8, 9) de manière à ce que le premier organe de blocage (8) soit fermé et le deuxième organe de blocage (9) soit ouvert ou reste ouvert, lorsqu'il est détecté que du gaz respiratoire amené au simulateur de patient (1) entre dans la reproduction de l'œsophage (6).

12. Simulateur de patient selon la revendication 10, **caractérisé en ce que** le dispositif de commande (14) coopère avec les premier et deuxième organes de blocage (8, 9) de manière à ce que le deuxième organe de blocage (9) soit fermé et le premier organe de blocage (8) soit ouvert ou reste ouvert, lorsqu'il est détecté que du gaz respiratoire amené au simulateur de patient entre dans la reproduction de la trachée (5).

13. Simulateur de patient selon l'une des revendications 1 à 12, **caractérisé en ce qu'au** moins un capteur est prévu pour mesurer l'état du simulateur pulmonaire (3), en particulier au moins un capteur de pression (18) pour mesurer la pression dans la cavité (4) du simulateur pulmonaire (3), dont les signaux sont envoyés au dispositif de commande (14) pour commander l'entraînement de soulèvement et d'abaissement (21) pour l'au moins un élément de cage thoracique pouvant être soulevé et abaissé, afin de soulever et abaisser l'au moins un élément de cage thoracique pouvant être soulevé et abaissé en fonction des signaux, lorsqu'il est détecté que du gaz respiratoire amené au simulateur de patient (1) entre dans la reproduction de la trachée (5), dans lequel le capteur de pression (18) est de préférence agencé et conçu pour déterminer la pression de ventilation.

14. Simulateur de patient selon l'une des revendications 1 à 13, **caractérisé en ce que** le dispositif de commande (14) est conçu pour commander le soulèvement de l'élément de paroi abdominale en fonction de l'angle de pivotement (25) de la reproduction de tête (7) par rapport à la reproduction de thorax (2).

15. Simulateur de patient selon l'une des revendications 1 à 14, **caractérisé en ce que** le simulateur pulmonaire (3) comprend au moins un élément de réglage pour régler la compliance et/ou au moins un élément de réglage pour régler la résistance, dans lequel le dispositif de commande (14) coopère de préférence avec l'élément de réglage pour régler la compliance de manière à ce qu'une réduction de la compliance des poumons est simulée lorsque l'entraînement de soulèvement et d'abaissement (22) pour l'élément de paroi abdominale pouvant être soulevé et abaissé est commandé pour soulever l'élément de paroi abdominale.
